# EUROPÄISCHE PATENTANMELDUNG

(11) **EP 2 439 424 A2**
(43) Veröffentlichungstag der Anmeldung: **11.04.2012**
(21) Anmeldenummer: 11007562.9
(22) Anmeldetag: 16.09.2011
(51) Int. Cl.: F16F 9/46, F16F 9/512

(54) **Frequenzabhängiger Schwingungsdämpfer in Zweirohrbauweise**

(30) Priorität: 11.10.2010 DE 102010047879
(71) Anmelder: Hölscher, Reinhard, Dr., 33154 Salzkotten (DE)
(72) Erfinder: Hölscher, Reinhard, Dr., 33154 Salzkotten (DE)
(74) Vertreter: Lenzing Gerber Stute

(57) **Zusammenfassung**

Die Erfindung betrifft einen Schwingungsdämpfer in Zweirohrbauweise
- mit einem Dämpfergehäuse (1), einem inneren Rohr (3) und einem in dem Gehäuse (2) verschieblichen Kolben (5), wobei der Kolben (5) in das Rohr (3) dichtend eingesetzt ist und ein erstes Volumen (7) und ein zweites Volumen (8) begrenzt, und
- mit einem Bodenventil (10), das das zweite Volumen (8) von einem Außenvolumen (9) trennt, sowie
- mit einem in dem Kolben (5) axial verschieblich gelagerten Servokolben (21) und einem in dem Bodenventil (10) axial verschieblich gelagerten Servokolben (121), wobei
- der Servokolben (21) mit dem Kolben (5) eine Servokammer (29) begrenzt, die über einen Kanal (16) mit dem ersten Volumen (7) in Verbindung steht und dass wenigstens ein Rohr (14) vorgesehen ist, das den Kolben (5) und den Servokolben (21) durchsetzt und das das erste Volumen (7) mit einem Dämpfungsventil (23, 24) verbindet.

## Beschreibung

Die vorliegende Erfindung betrifft einen Schwingungsdämpfer mit den Merkmalen des Oberbegriffs des Anspruchs 1.

Ein solcher Schwingungsdämpfer ist aus der deutschen Patentanmeldung DE 102007019621 A1 bekannt. Der bekannte Schwingungsdämpfer ist in Einrohrbauweise ausgeführt. Er umfasst einen rohrförmigen Grundkörper, der ein erstes Befestigungsauge trägt. In dem Grundkörper ist ein Dämpferkolben verschieblich angeordnet. Der Dämpferkolben steht mit einer Kolbenstange in Verbindung, die ein zweites Befestigungsauge trägt. Der Dämpferkolben teilt den Innenraum des Schwingungsdämpfers in zwei Kammern. Die beiden Kammern stehen über eine außerhalb des Dämpfers angeordnete Ventilanordnung miteinander in Verbindung. Die Ventilanordnung ermöglicht eine frequenzabhängige Dämpfungswirkung.

Der bekannte Schwingungsdämpfer hat den Vorteil, dass das externe Ventilgehäuse leicht zugänglich ist und dadurch Steuerungen, Einstellungen und auch eine Kühlung erleichtert werden. Es wird jedoch vielfach gewünscht, einen Schwingungsdämpfer mit frequenzabhängiger Dämpfungscharakteristik verfügbar zu machen, der ohne eine externe Ventilanordnung arbeitet.

Solche Schwingungsdämpfer sind aus den Druckschriften DE 690 05 747 T2, DE 36 12 006 A1 und DE 39 23 512 A1 bekannt. Diese Druckschriften zeigen Schwingungsdämpfer in Einrohrbauweise,

Aus der europäischen Patentschrift EP 1442227 B1 ist ein Schwingungsdämpfer für Kraftfahrzeuge in Zweirohrbauweise bekannt. Bei diesem Schwingungsdämpfer ist eine Ventilanordnung innerhalb des Grundkörpers vorgesehen, die eine frequenzabhängige Dämpfung ermöglicht. Diese Ventilanordnung arbeitet jedoch im Gegensatz zu der Ventilanordnung der DE 102007019621 A1 nur in einer Bewegungsrichtung frequenzabhängig.

Es ist deshalb Aufgabe der vorliegenden Erfindung, einen Schwingungsdämpfer in Zweirohrbauweise ohne externe Ventilanordnung zu schaffen, der eine frequenzabhängige Dämpfung in beiden möglichen Bewegungsrichtungen des Dämpfers ermöglicht.

Diese Aufgabe wird von einem Schwingungsdämpfer mit den Merkmalen des Anspruchs 1 gelöst.

Weil ein Servokolben mit dem Kolben des Dämpfers eine Servokammer begrenzt, die über einen Kanal mit dem ersten Volumen in Verbindung steht und wenigstens ein Rohr vorgesehen ist, das den Kolben und den Servokolben durchsetzt und welches das erste Volumen mit einem Dämpfungsventil verbindet, kann der Querschnitt des Servokolbens besonders groß ausgeführt sein, wodurch das Ansprechverhalten der frequenzabhängigen Dämpfung in der Zugstufe verbessert wird.

Wenn ein zweiter Servokolben mit dem Bodenventil eine Servokammer begrenzt, die über einen Kanal mit dem zweiten Volumen in Verbindung steht und wenn wenigstens ein Rohr vorgesehen ist, welches einen Ventilsockel des Bodenventils und den Servokolben durchsetzt und welches das zweite Volumen mit einem Dämpfungsventil verbindet, verbessert sich auch das Ansprechen der Frequenzabhängigkeit in der Druckstufe. Besonders gut wird das Ansprechverhalten, wenn der Servokolben kreisscheibenförmig ausgebildet ist und in seinem Zentrum gelagert ist, weil dadurch keine Kippmomente auf den Servokolben wirken.

Dies gilt auch, wenn der Servokolben gegenüber dem wenigstens einen Rohr in Axialrichtung verschieblich gelagert ist.

Eine sehr präzise und reproduzierbare Anpassung der Frequenzabhängigkeit an verschiedene Fahrzeuge ist möglich, wenn der das Volumen mit der Servokammer verbindende Kanal in der Länge einstellbar ist.

Schließlich kann in dem Bodenventil ein über eine Stellschraube einstellbarer Grundbypass vorgesehen sein, der das Ansprechverhalten des gesamten Dämpfers bei niedrigen Frequenzen verbessert.

Vorzugsweise ist das Ventilglied plattenförmig nach Art eines Plattenventils ausgebildet.

Wenn der oder die Servokolben mittels hubbegrenzenden Bauelemente wie z.B. Anschlagringen gegen das Ventilglied vorgespannt ist, kann eine Grunddämpfung vorgegeben und eingestellt werden.

Nachfolgend werden Ausführungsbeispiele der Erfindung anhand der Zeichnung beschrieben. Es zeigen:
- Fig. 1:: einen erfindungsgemäßen Schwingungsdämpfer in einem Längsschnitt;
- Fig. 2:: ein einstellbares Kolbenventil; sowie
- Fig. 3:: ein einstellbares Bodenventil.

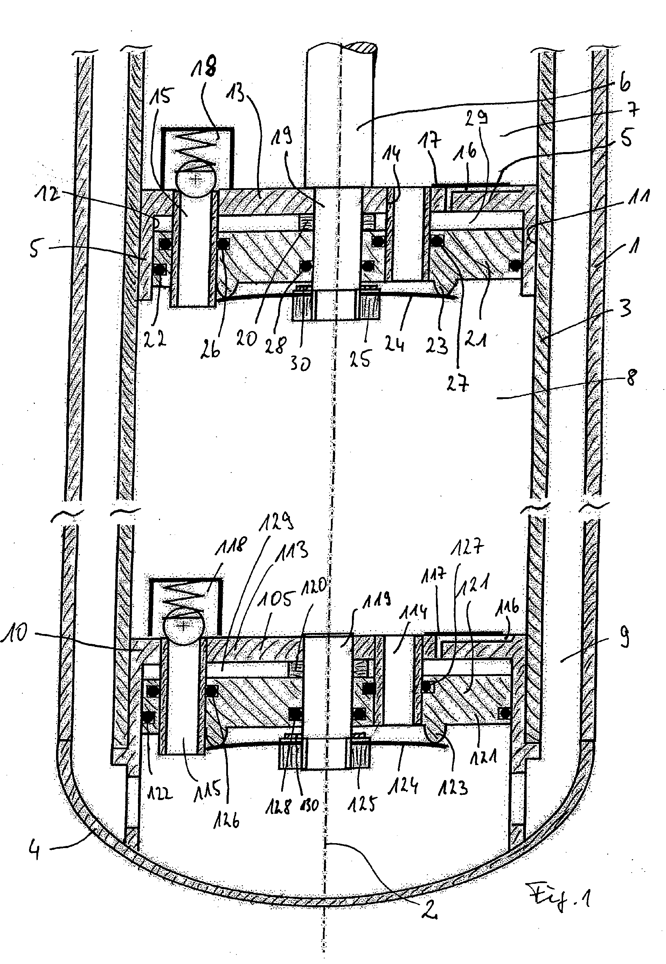

Die Figur 1 zeigt einen erfindungsgemäßen Zweirohrstoßdämpfer in einem Längsschnitt und der Stoßdämpfer weist in bekannter Weise ein äußeres rohrförmiges Dämpfergehäuse 1 auf, in dem im wesentlichen konzentrisch zu einer Längsachse 2 ein inneres Dämpferrohr 3 angeordnet ist. Der Dämpfer ist nach unten mit einem Boden 4 abgeschlossen. Im Bereich des Bodens 4 sind hier nicht dargestellte Befestigungselemente wie beispielsweise ein Befestigungsauge oder Gewindestift vorgesehen.

Innerhalb des Stoßdämpfers befindet sich ein Dämpferkolben, der insgesamt mit der Bezugsziffer 5 gekennzeichnet ist. Der Dämpferkolben 5 ist in Richtung der Achse 2 verschieblich in dem Rohr 3 angeordnet. Er ist fest mit einer Stange 6 verbunden, die an der nicht dargestellten Oberseite des Dämpfers über eine Dichtungs- und Führungseinheit aus dem Dämpfer heraus geführt ist und die ihrerseits ebenfalls mit Befestigungsmitteln wie beispielsweise einem Befestigungsauge oder Gewindestift versehen ist.

Der Kolben 5 teilt den Innenraum des inneren Rohrs 3 in zwei Volumina, nämlich ein oberes Volumen 7 und ein unteres Volumen 8. Ein drittes Volumen, das Außenvolumen 9, ist von dem unteren Volumen 8 durch ein Bodenventil 10 getrennt, welches fest zwischen dem unteren Ende des inneren Rohres 3 und dem Boden 4 angeordnet ist.

Der Kolben 5 weist eine Ventilanordnung auf, die als Dämpfungsventil wirkt. Eine praktische baugleiche Ventilanordnung ist in dem Bodenventil 10 vorgesehen. In der nachfolgenden Beschreibung dieser beiden Ventilanordnungen wird jeweils das entsprechende Bauelement des Bodenventils mit einer um 100 erhöhten Bezugsziffer gekennzeichnet.

Der Kolben 5 ist topfförmig ausgebildet und weist eine zylindrische äußere Wandung 11 auf, die an ihrer Außenseite in dem inneren Rohr 3 gleitet und gleichzeitig mit einer nicht dargestellten Dichtung abdichtet. Die Wandung weist zudem eine innere kreiszylindrische Oberfläche 12 auf und der Kolben 5 weist weiter einen plattenförmigen Boden 13 auf, der von einem ersten Rohr 14 und einem zweiten Rohr 15 sowie von einem Steuerkanal 16 durchsetzt ist. Die Rohre 15 und 16 sind in dem Boden 13 befestigt. Sie verlaufen parallel zu der Achse 2. Der Kanal 16 ist in seiner Oberseite von einer Einstellplatte 17 teilweise abgedeckt. Das Rohr 15 ist an der dem Kolbenboden 13 benachbarten Seite mit einem hier nur als Beispiel dargestellten Rückschlagventil 18 verschlossen. Das Rückschlagventil 18 kann auf verschiedene Weisen ausgeführt sein, beispielsweise auch als Plattenventil. Es ist hervorzuheben, dass das Rückschlagventil 18 so ausgeführt werden soll, dass es im wesentlichen ohne Druckaufbau öffnet und insbesondere keine eigene dynamische Kennlinie entwickelt.

Der Kolbenboden 13 wird von einem Ansatz 19 der Stange 6 mittig durchsetzt und ist an der Stange 6 in seiner axialen Position fixiert, beispielsweise durch ein Gewinde. An der der Stange 6 abgewandten Seite fließt an dem Kolbenboden 13 ein Anschlagring 20 an, der den Kolbenboden 13 gegebenenfalls in der axialen Position bezüglich der Achse 2 auf den Ansatz 19 fixiert. Im Innern des Kolbens 5 befindet sich ein Servokolben 21, der im wesentlichen kreisscheibenförmig ausgebildet ist. Der Servokolben 21 liegt mit seiner zylindrischen Umfangsfläche außen gleitend an der inneren Umfangsfläche 12 des Kolbens 5 an. Ein Dichtring 22 dichtet die Gleitfläche ab.

Der Servokolben 21 ist weiter mit einem umlaufenden Wulst 23 versehen, der an einer Ventilplatte 24 anliegt und der zusammen mit der Ventilplatte 24 ein Dämpfungsventil zur Dämpfung der Zugstufe bildet. Die Ventilplatte 24 ist wiederum beispielsweise kreisscheibenförmig ausgebildet und in ihrem Zentrum mittels einer Gewindemutter 25 an dem freien Ende des Ansatzes 19 befestigt. Die Ventilplatte 24 liegt linienförmig endlang einer Kreislinie an dem Wulst 23 dichtend an.

Der Servokolben 21 ist weiter mit einer oder mehreren Durchgangsbohrungen versehen. In einer oder mehreren einigen Durchgangsbohrungen ist jeweils ein Rohr 15 angeordnet, wobei die Passung so gewählt ist, dass der Hilfskolben 21 gegenüber dem Rohr 15 axial in Richtung der Achse 2 verschieblich ist. Ein Dichtring 26 ist für die Abdichtung an dieser Stelle vorgesehen. Das Rohr 15 endet unterhalb des Servokolbens 21 frei in dem zweiten Volumen 8. Das Rohr 14 ist in den anderen Bohrungen des Servokolbens 21 angeordnet. Wieder ist die Passung so gewählt, dass der Servokolben 21 leicht gegenüber dem Rohr 14 verschieblich ist. Ein Dichtring 27 ist zur Abdichtung zwischen der Außenseite des Rohres 14 und der Innenseite der entsprechenden Bohrung in dem Servokolben 21 vorgesehen. Das Rohr 14 endet an seinem unterem Ende frei in einem Raum zwischen dem Servokolben 21, dem Wulst 23 und der Ventilplatte 24. Das Rohr 14 stellt also eine dauernde hydraulische Verbindung zwischen dem ersten Volumen 7 und dem Raum oberhalb der Ventilplatte 24 her.

Eine dritte Bohrung in dem Servokolben 21 ist zentrisch in dem Servokolben 21 vorgesehen. Diese Bohrung dient zur Lagerung des Servokolben 21 auf dem Ansatz 19. Wiederum ist ein Dichtring 28 zur Abdichtung dieser Lagerstelle vorgesehen.

Der Servokolben 21 ist aufgrund der beschriebenen Lagerungen in Richtung der Achse 2 beschränkt beweglich und zwar zwischen dem Anschlagring 20 und dem über der Gewindemutter 25 liegenden Einstellscheibe 30.

Das Bodenventil 10 ist ähnlich aufgebaut. Statt des axial beweglichen Kolbens 5 ist hier jedoch ein Ventilsockel 105 fest in dem inneren Rohr 3 angeordnet. Während im Bereich des Kolbenventils die Führung des Hilfskolbens 21 durch den Ansatz 19 erfolgt, ist der Servokolben 121 des Bodenventils 10 an einem Zapfen 119 geführt. Die übrigen Bauelemente sind im wesentlichen baugleich. Auch hier bilden der Wulst 123 und die Ventilplatte 124 ein Dämpfungsventil, das die Druckstufe des Dämpfers bedämpft.

Zwischen dem Kolben 5 und dem Servokolben 21 befindet sich in dem kolbenseitigen Ventil ein Raum 29. Entsprechend ist zwischen dem Ventilkörper 105 und dem Servokolben 121 des Bodenventils ein Raum 129 vorgesehen. Die Räume 29, 129 können sich durch Bewegung der Servokolben 21 und 121 im Volumen verändern. Die Räume 29, 129 sind über die Kanäle 16, 116 mit dem jeweils gegenüber liegenden Volumen, dem ersten Volumen 7 beziehungsweise dem zweiten Volumen 8 verbunden. Die Deckplatte 17 beziehungsweise 117 definiert dabei die wirksame Länge der Kanäle 16 und 116. Die Kanäle 16 und 116 sind zunächst als Bohrungen parallel zu der Achse 2 angelegt, dann als Nuten in die äußere Umbaufläche des Kolbens 5 beziehungsweise der Ventilbasis 10 eingefräst. Die Nuten sind zu dem angrenzenden Volumen hin offen. Die Abdeckplatte 17 beziehungsweise 117 ist dazu vorgesehen, die Nut an ihrer Oberseite abzudecken und damit einen Kanal zu bilden, dessen wirksame Länge durch die Dimension und Positionierung der Abdeckplatte 17, 117 definiert wird.

Im Betrieb arbeitet der ebenso weit beschriebene Schwingungsdämpfer wie folgt:
Bei einer Aufwärtsbewegung des Dämpferkolbens 5, die einer Ausfederung des Fahrzeugs entspricht, bewegt sich der Kolben 5 durch die Zugkraft der Stange 6 in dem inneren Rohr 3 von dem Bodenventil 10 weg. Das erste Volumen 7 wird dadurch verkleinert und das zweite Volumen 8 wird vergrößert. Die in dem Dämpfer befindliche Hydraulikflüssigkeit strömt von dem Volumen 7 im entsprechenden Maß in das Volumen 8. Das Rückschlagventil 18 ist geschlossen, so dass die Hydraulikflüssigkeit nicht durch das Rohr 15 fließen kann, sondern durch das Rohr 14 fließen muss. Die Ventilplatte 24 setzt der Strömung der Hydraulikflüssigkeit einen Widerstand entgegen, der als Dämpfung wirkt. Die Ventilplatte 24 hebt sich dabei von dem Wulst 23 ab. Die Dämpfungswirkung hängt von der Federsteifigkeit der Ventilplatte 24 und von ihrer Vorspannung in Richtung auf den Wulst 23 ab.

Der Druck im Volumen 7 p1 erhöht sich aufgrund der Bewegung des Kolbens 5 und aufgrund des Widerstands, den die Ventilplatte 24 der Strömung der Hydraulikflüssigkeit entgegen setzt. Der Druck in dem Raum 29 entspricht dem Druck p1, der auch im Volumen 7 herrscht, da der Raum 29 über den Kanal 16 mit diesem kommuniziert. Der Servokolben 21 wird aufgrund der resultierenden Kraft aus den Flächenverhältnissen und des Druckgefälles der Drücke p1 der in dem Raum 29 herrscht und dem Druck p2, der im Volumen 8 herrscht gegen die Ventilplatte 24 gedrängt. Die Dämpfungswirkung steigt an, weil die Vorspannung der Ventilplatte 24 gegenüber dem Ringwulst 23 erhöht wird. Dieser Effekt tritt auf, wenn die Aufwärtsbewegung des Kolbens 5 ausreichend lang andauert, so dass ein nennenswertes Volumen an Hydraulikflüssigkeit durch den Kanal 16 in dem Hilfsraum 29 strömen kann, also bei Hubbewegungen mit niedriger Frequenz.

Die Gegenbewegung zu der beschriebenen Hubbewegung des Kolbens 5 entspricht dem Einfedern des Dämpfers. Hierbei bewegt sich der Kolben 5 unter dem Druck der Stange 6 auf das Bodenventil 10 zu. In dem Bodenventil 10 wird bei dieser Bewegung zunächst das Rückschlagventil 118 geschlossen. Dann wird die von der Stange 6 verdrängte Hydraulikflüssigkeit durch das Rohr 114 in den Raum zwischen dem Servokolben 121 und der Ventilplatte 124 gedrängt, um schließlich aufgrund des geschehenen Drucks die Ventilplatte 124 von dem Ringwulst 123 abzuheben, so dass die Hydraulikflüssigkeit unter das Bodenventil 10 und schließlich in den Außenraum 9 strömen kann. Bei langsamer Kolbenbewegung strömt außerdem Hydraulikflüssigkeit durch den Kanal 116 in den Raum 129. Der entstehende höhere Druck bewegt den Servokolben 121 auf die Ventilplatte 124 zu und erhöht die Vorspannung der Ventilplatte 124 auf den Ringwulst 123. Die Dämpfungswirkung nimmt hierbei ebenfalls zu. Das Dämpfungsventil des Kolbens 5 ist bei der Abwärtsbewegung nicht aktiv, da die Ventilplatte 24 gegen den Ringwulst 23 abdichtet. Das Rückschlagventil 18 öffnet bei der Abwärtsbewegung des Kolbens 5, so dass Hydraulikflüssigkeit im wesentlichen ungehindert durch das Rohr 15 strömen kann.

Bei hohen Anregungsfrequenzen des Stoßdämpfers ist die Zeit, während derer sich der Kolben 5 in einer Richtung bewegt, nur sehr kurz. Die Folge ist, dass wenig Hydraulikflüssigkeit durch den Kanal 16 in den Raum 29 beziehungsweise bei Abwärtsbewegung des Kolbens 5 durch den Kanal 116 in den Raum 129 strömen kann, weil die nächste gegenläufige Bewegung schon nach sehr kurzer Zeit folgt. Hierdurch wird das Volumen an Hydraulikflüssigkeit begrenzt, die in dem Raum 29 beziehungsweise 129 strömen kann. Der Servokolben 21 beziehungsweise der Servokolben 121 werden dadurch kaum oder gar nicht aus ihrer Ruhestellung bewegt, in der Sie an dem Anschlagring 20 beziehungsweise 120 anliegen. Die Vorspannung des Dämpfungsventils zwischen dem Ringwulst 23 und der Ventilplatte 24 beziehungsweise dem Ringwulst 123 und der Ventilplatte 124 wird dadurch nicht oder kaum erhöht. Die Dämpfungswirkung wird entsprechend nicht verstärkt. Sie ist gegenüber der Dämpfungswirkung bei niedrigen Anregungsfrequenzen geringer.

In der Folge arbeitet der Schwingungsdämpfer bei niedrigen Anregungsfrequenzen mit einer durch die Wirkung der Servokolben 21 und 121 erhöhten Dämpfung, während bei hohen Anregungsfrequenzen die Dämpfung verringert ist.

Im Fahrbetrieb des Kraftfahrzeugs führt diese frequenzabhängige Dämpfung zu einem vorteilhaften Fahrverhalten, in dem nämlich niederfrequente Anregungen wie zum Beispiel Bodenwellen oder dynamische Herablaständerungen oder Achslaständerungen stark gedämpft werden, während hochfrequente Anregungen wie beispielsweise Radunwucht oder kurze Fahrbahnstöße ( Waschbrettprofil), Curbs oder sonstige Fahrbahnunebenheiten nur gering gedämpft werden. Die niedrige Dämpfung bei hohen Anregungsfrequenzen führt dazu, dass der Fahrbahnkontakt des jeweiligen Rades verbessert wird, da das Rad der Fahrbahnkontur besser folgen kann und das der Fahrkomfort verbessert wird, weil die entsprechenden Anregungsfrequenzen nicht in vollem Maße an die Karosserie weitergeleitet werden.

Eine Verstellung der Dämpferkennlinie ist bei der beschriebenen Vorrichtung durch Änderung der Vorspannung der Ventilplatten 24 und 124 möglich. Diese Vorspannung kann durch eine Verschiebung der Grundstellung der Servokolben 20 und 121 erfolgen. Diese Verstellung wird durch Austausch der Scheiben 20 und 120 gegen solche anderer Dicke bewirkt.

Vorteilhaft bei den dargestellten Ventilanordnungen ist die im Vergleich zum Durchmesser des Stoßdämpfers sehr große Oberfläche der Servokolben 21 und 121. Diese sind im Durchmesser im Vergleich zu bekannten technischen Lösungen besonders groß ausgeführt. Die Servokolben 21 und 121 sind mittig im Bereich des Ansatzes 29 beziehungsweise des Zapfens 119 geführt und hierdurch ist ein präzise Führung der Servokolben 21, 121 gewährleistet. Die Anordnung ist auch einfach montierbar, da die Servokolben 21, 121 vor der Montage der Ventilplatten 24, 124 auf die jeweiligen Führungen aufgesetzt werden können.

Ein weiteres vorteilhaftes Merkmal ist die Gestaltung der Kanäle 16, 116. Hier kann die hydraulisch wirksame Länge über die Dimension und Position der Abdeckplatten 17, 117 variiert werden. Hintergrund ist, dass die Einstellung des dynamischen Strömungswiderstandes über die wirksame Länge der Kanäle 16, 116 erheblich präziser vorgenommen werden kann, als durch die Kalibrierung von Bohrungen, wie dies im Stand der Technik vorgesehen ist. Im Übrigen kann die Kennlinie des beschriebenen Dämpfers daher in der Zug- Bzw. Druckstufe frequenzabhängig unabhängig voneinander in beiden Arbeitsrichtungen durch Dimensionierung der Komponenten und entsprechender Einstellung gewählt werden. Die Kennlinie ist auch im wesentlichen frei von Störungseinflüssen, da allein die Vorspannung des durch die Ventilplatten 24, 124 gebildeten Dämpfungsventils hierfür entscheidend ist. Das mit den Dämpfungsventilen hydraulisch in Reihe geschaltete Rückschlagventil 18, 118 kann so ausgebildet sein, dass es zur Kennlinie selbst nicht beiträgt.

Es ergibt sich insgesamt ein Schwingungsdämpfer für Kraftfahrzeuge, bei dem eine frequenzabhängige Kennlinie für jede Dämpfungsrichtung mit großer Präzision ausgewählt und eingestellt werden kann. Die die Dämpfungswirkung beeinflussenden Parameter sind bei einer Serienfertigung durch die große Dimensionierung und den Aufbau der Dämpfungsventile besonders genau einzuhalten. Die Dimensionierung und die Führung der Servokolben 21, 121 trägt dazu bei, dass die Kennlinie im wesentlichen frei von störenden Einflüssen wie zum Beispiel innerer Reibung, Klemmkräften und dergleichen bleibt.

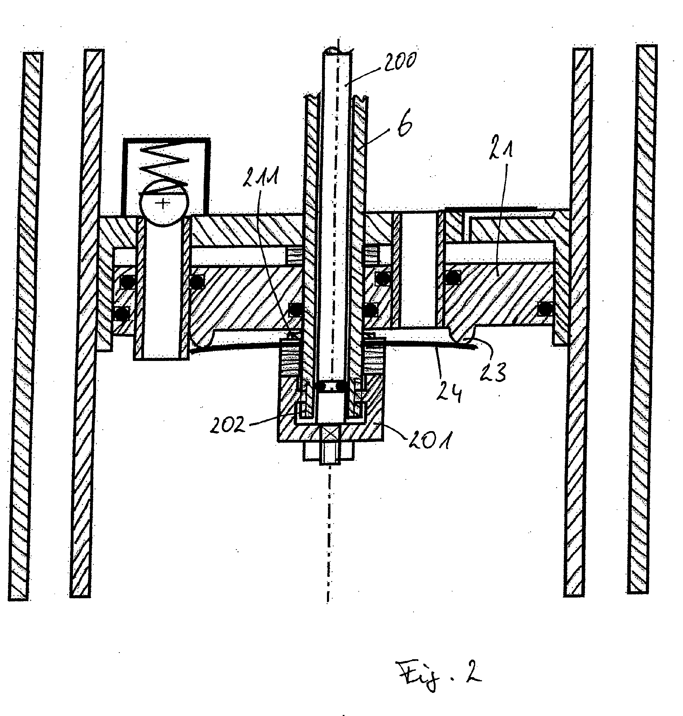

In der Figur 2 ist ein Kolbenventil der oben beschriebenen Bauart dargestellt, bei dem die Vorspannung des Ventilglieds 24 einstellbar ist. Zahlreiche Bezugsziffern wurden wegen der besseren Übersichtlichkeit weggelassen.

Die Kolbenstange 6 ist hohl gebohrt und umgibt eine Verstellwelle 200, die drehbar in der Kolbenstange 6 gelagert ist. Die Verstellwelle 200 ist drehfest mit einer Mutter 201 verbunden, die auf einem Gewinde 202 der Kolbenstange 6 gelagert ist. An dem nicht dargestellten oberen Ende ist die Verstellwelle 200 von außen zugänglich. Eine Drehung mit einem geeigneten Werkzeug verändert aufgrund der Steigung des Gewindes 202 die axiale Lage der Mutter 201 und damit die Vorspannung des Ventilglieds 24 gegenüber dem Ventilsitz 23. Die Dämpfungseigenschaften des Schwingungsdämpfers in der Zugstufe werden dadurch variiert.

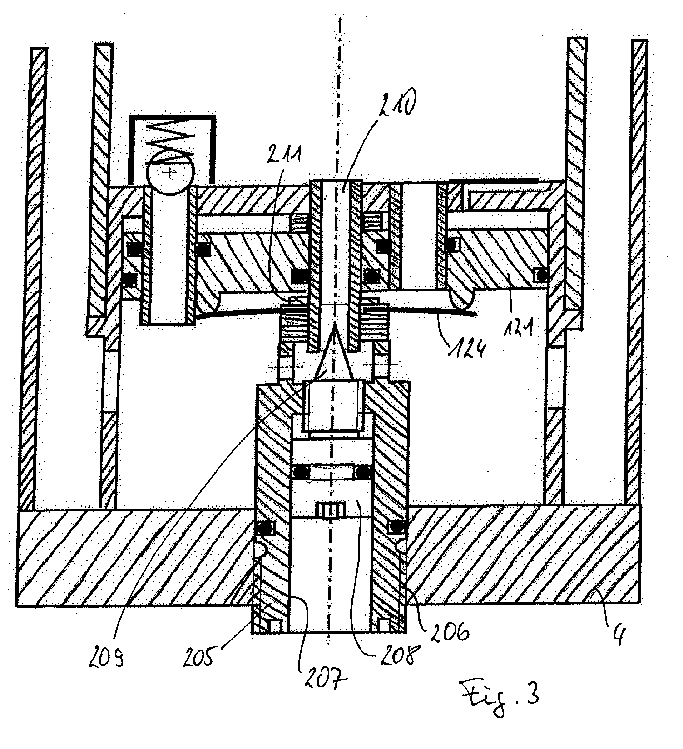

Die Figur 3 zeigt schließlich ein Bodenventil der oben beschriebenen Bauart.

Das Bodenventil umfasst eine in den Boden 4 des Stoßdämpfers mittig eingesetzte Einstellschraube 205, die mittels eines Gewindes 206 in Axialrichtung verlagerbar ist. Eine Änderung der axialen Position durch eine Drehung der Einstellschraube 205 bewirkt eine Änderung der Vorspannung des Ventilglieds 124 und damit eine Änderung der Dämpfungseigenschaften in der Druckstufe des Stoßdämpfers.

Die Einstellschraube 205 ist ihrerseits mit einer mittigen Gewindebohrung 207 versehen, in der eine Stellschraube 208 drehbar sitzt. Die Stellschraube trägt an ihrem dem Innenraum des Stoßdämpfers zugewandten Ende einen Konus 209. Der Konus 209 begrenzt den freien Querschnitt einer Bypassbohrung 210. Abweichend von der dargestellten Kegelform kann der Konus 209 auch mit einer anderen geeigneten Form ausgeführt sein. Durch Drehung der Stellschraube 208 wird der Querschnitt der Bypassbohrung 210 variiert und dadurch der sogenannte Grundbypass des Stoßdämpfers in der Druckstufe eingestellt.

Bei allen oben beschriebenen Ausführungsformen ist der Hub des der Servokolben begrenzt, um die Ventilglieder 24, 124 nicht zu überlasten. Hierzu können je nach Anwendungsfall auch auswechselbare Anschlagringe 211 vorgesehen sein, die in verschiedenen Dicken eingesetzt werden können.

## Patentansprüche

1. Schwingungsdämpfer in Zweirohrbauweise
- mit einem Dämpfergehäuse (1), einem inneren Rohr (3) und einem in dem Gehäuse (2) in eienr Axialrichtung verschieblichen Kolben (5), wobei der Kolben (5) in das Rohr (3) dichtend eingesetzt ist und ein erstes Volumen (7) und ein zweites Volumen (8) begrenzt, und
- mit einem Bodenventil (10), das das zweite Volumen (8) von einem Außenvolumen (9) trennt, sowie
- mit einem in dem Kolben (5) axial verschieblich gelagerten Servokolben (21) und einem in dem Bodenventil (10) axial verschieblich gelagerten Servokolben (121), **dadurch gekennzeichnet, dass**
- der Servokolben (21) mit dem Kolben (5) eine Servokammer (29) begrenzt, die über einen Kanal (16) mit dem ersten Volumen (7) in Verbindung steht und dass wenigstens ein Rohr (14) vorgesehen ist, das den Kolben (5) und den Servokolben (21) durchsetzt und das das erste Volumen (7) mit einem Dämpfungsventil (23, 24) verbindet.

2. Schwingungsdämpfer nach Anspruch 1, **dadurch gekennzeichnet, dass** ein zweiter Servokolben (121) mit dem Bodenventil (10) eine zweite Servokammer (129) begrenzt, die über einen Kanal (116) mit dem zweiten Volumen (8) in Verbindung steht und dass wenigstens ein Rohr (114) vorgesehen ist, das einen Ventilsockel (105) des Bodenventils (10) und den Servokolben (121) durchsetzt und welches das zweite Volumen (8) mit einem Dämpfungsventil (123, 124) verbindet.

3. Vorrichtung nach einem der vorhergehenden Ansprüche, **dadurch gekennzeichnet, dass** der Servokolben (21, 121) kreisscheibenförmig ausgebildet ist und in seinem Zentrum gelagert ist.

4. Vorrichtung nach einem der vorhergehenden Ansprüche, **dadurch gekennzeichnet, dass** der Servokolben (21, 121) gegenüber dem wenigstens einen Rohr (14, 114) in Axialrichtung verschieblich gelagert ist.

5. Vorrichtung nach einem der vorhergehenden Ansprüche, **dadurch gekennzeichnet, dass** das Ventilglied (24, 124) plattenförmig ist.

6. Vorrichtung nach einem der vorhergehenden Ansprüche, **dadurch gekennzeichnet, dass** der das Volumen (7, 8) mit der Servokammer (29, 129) verbindende Kanal (16, 116) in der Länge einstellbar ist.

7. Vorrichtung nach einem der vorhergehenden Ansprüche, **dadurch gekennzeichnet, dass** in dem Bodenventil (10) ein über eine Stellschraube (208) einstellbarer Grundbypass vorgesehen ist.
